(19) Europäisches Patentamt / European Patent Office / Office européen des brevets

(11) EP 1 923 988 B1

(12) # EUROPÄISCHE PATENTSCHRIFT

(45) Veröffentlichungstag und Bekanntmachung des Hinweises auf die Patenterteilung:
**21.02.2018 Patentblatt 2018/08**

(51) Int Cl.:
***H02J 7/24*** $^{(2006.01)}$ ***H02P 9/48*** $^{(2006.01)}$

(21) Anmeldenummer: **06023850.8**

(22) Anmeldetag: **16.11.2006**

(54) **Vorrichtung und Verfahren zum Bereitstellen eines geregelten, limitierten Generatorerregerstroms**

Device and method for generating a controlled and limited generator excitation current

Dispositif et procedé pour la génération d'un courant d'excitation réglé et limité

(84) Benannte Vertragsstaaten:
**DE FR GB IT**

(43) Veröffentlichungstag der Anmeldung:
**21.05.2008 Patentblatt 2008/21**

(73) Patentinhaber: **Infineon Technologies Austria AG
9500 Villach (AT)**

(72) Erfinder: **Steiner, Manfred
8524 Bad Gams (AT)**

(74) Vertreter: **Schenk, Markus
Schoppe, Zimmermann, Stöckeler
Zinkler, Schenk & Partner mbB
Patentanwälte
Radlkoferstrasse 2
81373 München (DE)**

(56) Entgegenhaltungen:
**EP-A- 1 187 307**
**DE-A1-102005 014 136**
**US-A- 5 508 601**
**US-A1- 2003 178 973**
**US-A1- 2006 108 987**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 923 988 B1

## Beschreibung

Hintergrund der Erfindung

Die vorliegende Erfindung bezieht sich auf ein Konzept zum Bereitstellen eines geregelten, limitierten Generatorerregerstroms an einen Generator, um eine geregelte Ausgangsspannung des Generators zu erhalten, wie es insbesondere zum Bereitstellen einer geregelten Spannung bei einem Spannungsgenerator in einem Kraftfahrzeug eingesetzt werden kann.

Zur Versorgung von elektronischen Komponenten in einem Kraftfahrzeug, wird neben einer Fahrzeugbatterie im Allgemeinen auch ein Generator, insbesondere eine Lichtmaschine verwendet. Der Generator bzw. die Lichtmaschine (engl. Alternator) wird von einem laufenden Motor als Nebenaggregat angetrieben. Der Antrieb kann dabei beispielsweise mittels eines Riemenantriebs oder aber auch direkt über eine Kurbelwelle erfolgen.

Bei einer angetriebenen Lichtmaschine wird von dieser ein Strom beispielsweise zur Ladung der Fahrzeugbatterie und für an ein Bordnetz angeschlossene Verbraucher bereitgestellt. Die Lichtmaschine wandelt dabei vom Motor bereitgestellte mechanische Energie in elektrische Energie um, wobei die erforderliche mechanische Leistung ungefähr proportional zur abgegeben elektrischen Leistung ist. Eine von einer Lichtmaschine gelieferte, ungeregelte Spannung schwankt stark mit der Drehzahl des Motors und der angeschalteten Last. Weil eine Lichtmaschine in der Lage sein sollte, bereits bei niedriger Motordrehzahl die Nennspannung des Kfz-Bordnetzes aufzubauen, wird sie im Allgemeinen überdimensioniert. Damit sie nicht infolge dessen bei hoher Drehzahl eine zulässige Ladeschlussspannung der Fahrzeugbatterie überschreitet, wird die Spannung im Allgemeinen durch einen Regler auf einen Maximalwert begrenzt.

Bei Drehstrom-Lichtmaschinen wird das elektrisch erzeugte Erregerfeld des angetriebenen Lichtmaschinen-Rotors durch einen üblicherweise auf einer der Antriebsseite entgegengesetzten Seite implementierten integrierten Schaltkreis, den elektronischen Laderegler beeinflusst. Der Regler vergleicht im Allgemeinen eine gleichgerichtete Ist-Spannung am Ausgang des Generators mit einer reglerinternen stabilen Referenzspannung bzw. einem Spannungssollwert und passt die Stärke des Erregerfeldes durch mehr oder weniger starken Generatorerregerstromfluss durch den Rotor so an, dass die Ist-Spannung des Generators bzw. Generators last- und drehzahlunabhängig zumindest näherungsweise konstant bleibt. Herkömmlicherweise erfolgt dabei nur eine Regelung der Generatorausgangsspannung. Die Begrenzung des Generatorerregerstroms erfolgt allerdings im Allgemeinen nicht durch den Regler.

Wünschenswert wäre neben einer Spannungsregelung auch eine Stromlimitierung, damit die mechanische Belastung des Motorstranges durch den Generator von einem Motorsteuergerät begrenzt werden kann. Der Stromlimitierungswert sollte dabei beispielsweise vom Motorsteuergerät gesetzt werden können.

Dazu offenbart die Schrift US 2003/178973 A1 eine Kfz-Generatorschaltung mit Limitierung einer Stromversorgung für eine Erregerwicklung eines Kfz-Generators abhängig von einer momentanen Rotationsgeschwindigkeit. Um ein maximales Generatordrehmoment nicht zu überschreiten, wird der Erregerstrom durch die Erregerwicklung des Kfz-Generators begrenzt.

Die Offenlegungsschrift DE 10 2005 014136 A1 offenbart einen Controller für eine Fahrzeuglichtmaschine. Mit einem derartigen Controller wird eine Energieerzeugungssteuerung über Impulsbreitenmodulation durch EIN/AUS-Schalten durchgeführt, das für eine an einer Feldwicklung anliegenden Spannung stattfindet. Für eine solche Energieerzeugungssteuerung wird die Zeitabstimmung des EIN/AUS-Schaltens digital von einem Mikroprozessor vorgenommen, wobei ein Umschalten zwischen einer Spannungssteuerung und einer Stromsteuerung mit einer unterschiedlichen Hysterese zwischen einem ersten und einem zweiten Stromgrenzwert möglich ist.

EP 1 187 307 A1 beschreibt eine Mehrgrößenregelung einer Drehstrommaschine, die nach dem Klauenpolprinzip aufgebaut ist. Es werden transformierte Ständerströme sowie getrennt davon der Erregerstrom geregelt. Mit Hilfe einer integrierten Korrektureinrichtung, die eine Korrekturmatrix widerspiegelt, können separate Komponenten wie ein Entkopplungsnetzwerk sowie getrennte Stromregler für den Querstrom und den Längsstrom entfallen. Die dargestellte Mehrgrößenregelung lässt eine entkoppelte Regelung der auftretenden Ständerstromkomponenten Längsstrom, Querstrom und des Erregerstromes zu.

US 5 508 601 A1 beschreibt ein Schutzsystem, um kurzgeschlossene Erregerwicklungs-Gleichrichterdioden in einer elektrischen Maschine zu detektieren und zu isolieren. Dazu wird der Erregerfeldstrom und die Ausgangsspannung des Generators überwacht.

US 2006/108987 A1 offenbart ein Verfahren, um zu bestimmen, ob ein Ladedraht gebrochen ist, der eine Verbindung zwischen einer Batterie und einem Generator herstellt. Der Generator ist konfiguriert, um die Batterie über den Ladedraht zu laden. Das Verfahren umfasst das Messen einer Spannung der Batterie, Detektieren einer Betriebsrate des Generators und Bestimmen, dass der Ladedraht gebrochen ist, wenn die gemessene Batteriespannung niedriger ist als eine vorherbestimmte Schwellenwertspannung, und wenn die detektierte Betriebsrate des Generators niedriger liegt als ein vorherbestimmter Schwellenwert.

## Zusammenfassung der Erfindung

Gemäß Ausführungsbeispielen schafft die vorliegende Erfindung eine Vorrichtung zum Bereitstellen eines geregelten, limitierten Generatorerregerstroms an einen Generator, um eine geregelte Ausgangsspannung des Generators zu erhalten, mit einer Einrichtung zum gewichteten Kombinieren einer ersten Regeldifferenz basierend auf einer Sollspannung und der geregelten Ausgangsspannung und einer zweiten Regeldifferenz basierend auf einem vordefinierten Stromwert und dem geregelten Generatorerregerstrom, um ein auf der Kombination der ersten Regeldifferenz und der zweiten Regeldifferenz basierendes Kombinationssignal zu erhalten, einer Einrichtung zum Bereitstellen einer Stellgröße basierend auf dem Kombinationssignal und einer Regelvorschrift und einer Einrichtung zum Liefern des geregelten, limitierten Generatorerregerstroms an den Generator basierend auf der Stellgröße, so dass die geregelte Ausgangsspannung durch den Generator bereitstellbar ist.

Gemäß weiteren Ausführungsbeispielen schafft die vorliegende Erfindung ein Verfahren zum Bereitstellen eines geregelten, limitierten Generatorerregerstroms an einen Generator, um eine geregelte Ausgangsspannung des Generators zu erhalten, mit einem Schritt des gewichteten Kombinierens einer ersten Regeldifferenz basierend auf einer Soll-Spannung und der geregelten Ausgangsspannung und einer zweiten Regeldifferenz basierend auf einem vordefiniertem Stromwert und dem geregelten Generatorerregerstrom, um ein auf der Kombination der ersten Regeldifferenz und der zweiten Regeldifferenz basierendes Kombinationssignal zu erhalten, einem Schritt des Bereitstellens einer Stellgröße basierend auf dem Kombinationssignal und einer Regelvorschrift und einem Schritt des Lieferns des geregelten, limitierten Stroms an den Generator basierend auf der Stellgröße, so dass die geregelte Ausgangsspannung durch den Generator bereitstellbar ist.

Somit weisen Ausführungsbeispiele der vorliegenden Erfindung den Vorteil auf, dass durch die Stromlimitierung eine mechanische Belastung des Motorstranges durch den Generator begrenzt werden kann.

## Kurzbeschreibung der Figuren

Bevorzugte Ausführungsbeispiele der vorliegenden Erfindung werden nachfolgend Bezug nehmend auf die beiliegenden Zeichnungen näher erläutert. Es zeigen:

Fig. 1 ein Blockdiagramm eines herkömmlichen Kfz-Spannungs-Generatorreglers;

Fig. 2 ein Blockdiagramm eines Spannungsreglers mit Stromlimitierung gemäß einem Ausführungsbeispiel der vorliegenden Erfindung;

Fig. 3 ein Blockdiagramm einer integrierten Schaltung zur Steuerung einer Lichtmaschine gemäß einem Ausführungsbeispiel der vorliegenden Erfindung; und

Fig. 4 ein Diagramm zur Veranschaulichung einer gleichzeitigen Strom- und Spannungsregelung gemäß einem Ausführungsbeispiel der vorliegenden Erfindung.

## Detaillierte Beschreibung der Erfindung

Bezüglich der nachfolgenden Beschreibung sollte beachtet werden, dass bei den unterschiedlichen Ausführungsbeispielen gleich oder gleich wirkende Funktionselemente gleiche Bezugszeichen aufweisen und somit die Beschreibung dieser Funktionselemente in den verschiedenen und nachfolgend dargestellten Ausführungsbeispielen untereinander austauschbar sind.

Bevor im Nachfolgenden Bezug nehmend auf die Fig. 2 bis 4 Ausführungsbeispiele der vorliegenden Erfindung näher beschrieben und erläutert werden, soll im Folgenden anhand von Fig. 1 der Aufbau und die Funktionsweise eines herkömmlichen Spannungsgenerators, wie er beispielsweise im Automotive-Bereich eingesetzt wird, beschrieben werden.

Fig. 1 zeigt das schematische Blockdiagramm eines Regelkreises zur Regelung einer von einem Generator bereitgestellten Spannung, wie er beispielsweise in Kraftfahrzeugen eingesetzt werden kann.

Der Regelkreis umfasst einen Tiefpassfilter 102, der einen Eingang für eine Regeldifferenz aus einem Spannungssollwert 104 und einem Messwert einer Ist-Spannung 106 aufweist. Der Ausgang des Tiefpassfilters 102 ist mit einem Eingang eines PI-Reglers 108 gekoppelt. Ein Ausgang des PI-Reglers 108 ist mit einem Eingang eines Pulsweitenmodulators 110 (PWM = Pulsweitenmodulation) verschaltet, dessen Ausgang wiederum mit einem Steueranschluss eines Regeltransistors 112 gekoppelt ist. An einem Ausgang liefert der Regeltransistor 112 einen geregelten Erregerstrom für einen Generator bzw. eine Lichtmaschine 114, an deren Ausgang der Spannungs-Istwert 106 anliegt. Der Spannungs-Istwert wird über eine Messvorrichtung 116 und ein Filter 118 zurückgekoppelt, um zusammen mit dem Spannungssollwert 104 eine Regeldifferenz am Eingang des Tiefpassfilters 102 zu bilden. Bei dem in Fig. 1 dargestellten Aufbau des Reglerkreises bilden der Pulsweitenmodulator 110, der Regeltransistor 112 und der Generator 114 zusammen ein Stellglied 120 des Regelkreises.

Bei Generatorreglern, wie in Fig. 1 dargestellt, wird lediglich die vom Generator 114 bereitgestellte Spannung 106 gemessen und mit Hilfe des PI-Reglers 108 das Stellglied 120, welches die Spannung 106 einstellt, angesteuert. Bei der in Fig. 1 dargestellten herkömmlichen Ausführung eines Generatorreglers kann eine Belastung eines Motorstranges eines Kraftfahrzeugs durch den Generator bzw. die Lichtmaschine 114 durch ein Steuergerät nur durch folgende Prinzipien beeinflusst werden.

Zum Einen kann ein Motorsteuergerät eine Aktivierung bzw. Deaktivierung des Generatorreglers bzw. der in Fig. 1 dargestellten Regelschleife durchführen. Diese Methode weist den Nachteil auf, dass während der Deaktivierung die Fahrzeugbatterie eine Stromversorgung anstatt des Generators 114 übernehmen muss. Bei Fahrzeugen mit einem hohen Leistungsverbrauch stellt dies ein signifikantes Problem dar.

Des Weiteren könnte ein Motorsteuergerät einen geringeren Spannungs-Sollwert 104 vorgeben, um den Motorstrang zu entlasten. Eine ausreichend feine Limitierung der mechanischen Leistung des Generators 114 ist jedoch nicht möglich, weil bei dem in Fig. 1 gezeigten Generatorregler eine Messung des Generatorerregerstroms nicht vorhanden ist und das Motorsteuergerät nicht rasch und fein genug den Spannungssollwert 104 verändern kann. Das liegt im Allgemeinen an einem verwendeten Kommunikations-Interface und dem dabei verwendeten Kommunikationsprotokoll.

Die beiden Blöcke 102 und 118 bilden zusammen eine "Dezimierung". Der Block 118 ist z.B. eine reine Summierstufe, in der beispielsweise 32 oder 64 Messwerte eines ADC (ADC = Analog Digital Converter) summiert werden können. Der Block 102 kann beispielsweise ein digitaler Tiefpass 1. Ordnung sein. Zusammen ergeben die beiden Blöcke 102 und 118 dann eine Dezimierung von 32 bzw. 64 Messwerten auf einen "Spannungsmesswert", wobei im Bereich bestimmter Frequenzen eine optimale, gewollte Unterdrückung entstehen kann. Die Summierstelle kann beispielsweise sowohl vor Block 118 angeordnet sein, oder auch zwischen Block 118 und Block 102. Ein Messwert eines ADC wird im Allgemeinen bzgl. Gain bzw. Offset korrigiert. Daher ist es eventuell sinnvoll, zwischen Block 116 und Block 118 zusätzlich eine Messfehlerkorrektur einzufügen, um Messwerte eines ADC korrigieren zu können.

An dieser Stelle soll ferner darauf hingewiesen werden, dass Generatorerregerstrom und Motordrehzahl zusammen im Wesentlichen die mechanische Leistung bzw. das mechanische Moment des Generators 114 bestimmen.

Nachdem anhand von Fig. 1 im Vorhergehenden der Aufbau und die Funktionsweise eines herkömmlichen Generatorreglers beschrieben wurde und dabei aufgezeigt wurde, dass die Belastung des Motorstranges durch den Generator 114 durch ein Motorsteuergerät nur begrenzt beeinflusst werden kann, sollen im Nachfolgenden anhand der Fig. 2 - 4 Ausführungsbeispiele der vorliegenden Erfindung näher erläutert werden.

Fig. 2 zeigt eine Vorrichtung 200 zum Bereitstellen eines geregelten, limitierten Generatorerregerstroms an einen Generator, um eine geregelte Ausgangsspannung des Generators zu erhalten, gemäß einem Ausführungsbeispiel der vorliegenden Erfindung.

Die Vorrichtung 200 weist eine Einrichtung 202 zum gewichteten Kombinieren einer ersten Regeldifferenz 204 basierend auf einer Sollspannung 104 und einer geregelten Spannung 106 und einer zweiten Regeldifferenz 206 basierend auf einem vordefinierten Stromwert 208 und einem geregelten, limitierten Generatorerregerstrom 210 auf. Die erste Regeldifferenz 204 und die zweite Regeldifferenz 206 liegen jeweils an einem Eingang der Einrichtung 202 zum gewichteten Kombinieren an. Die Einrichtung 202 zum gewichteten Kombinieren ist ausgangsseitig mit einer Einrichtung 212 zum Bereitstellen einer Stellgröße 214, basierend auf einem Kombinationssignal 216 und einer Regelvorschrift gekoppelt. Der Ausgang der Einrichtung 212 ist über die Stellgröße 214 mit einer Einrichtung 218 zum Liefern des geregelten limitierten Stroms 210, basierend auf der Stellgröße 214 gekoppelt, so dass die geregelte Spannung 106 durch den Generator bereitstellbar ist.

Gemäß einem Ausführungsbeispiel der vorliegenden Erfindung bedeutet der vordefinierte Stromwert 208 einen maximalen Stromwert für den Generatorerregerstrom 210.

Gemäß weiteren Ausführungsbeispielen ermittelt die Einrichtung 202 zum gewichteten Kombinieren einen Gewichtungsfaktor GV, um jeweils einen gewichteten Einfluss der ersten Regeldifferenz 204 und der zweiten Regeldifferenz 206 auf das Kombinationssignal 216 am Ausgang der Einrichtung 202 zu erhalten. Gemäß Ausführungsbeispielen verhält sich der ermittelte Gewichtungsfaktor GV beispielsweise proportional zu der zweiten Regeldifferenz 206 und umgekehrt proportional zu der ersten Regeldifferenz 204. Das heißt, dass der Gewichtungsfaktor GV umso größer ausfällt, je größer die zweite Regeldifferenz 206 ist bzw. je größer die Abweichung des Strom-Istwerts 210 von dem vordefinierten Stromwert 208 ist. Andererseits wird der Gewichtungsfaktor GV umso kleiner, je größer die erste Regeldifferenz 204 ist bzw. je größer die Abweichung der geregelten Spannung 106 von dem Spannungssollwert 104 ist. Natürlich können die Abhängigkeiten des Gewichtungsfaktors GV von den Regeldifferenzen 204 und 206 auch anders gewählt werden.

Gemäß weiteren Ausführungsbeispielen weist der ermittelte Gewichtungsfaktor GV einen unteren $L_u$ und einen oberen Limitierungswert $L_o$ auf, wobei bei Erreichen des unteren Limitierungswerts $L_u$ das Kombinationssignal 216 nur von der zweiten Regeldifferenz 206 und bei Erreichen des oberen Limitierungswerts $L_o$ nur von der ersten Regeldifferenz 204 abhängt. Gemäß weiteren Ausführungsformen kann diese Abhängigkeit genauso gut umgekehrt gewählt werden.

Bei einer Ausführungsform der vorliegenden Erfindung bildet die Einrichtung 202 zum gewichteten Kombinieren das Kombinationssignal 216 aus einer Kombination eines Produkts der ersten Regeldifferenz 204 mit einem quadratischen Anteil des Gewichtungsfaktors GV und einem Produkt der zweiten Regeldifferenz 206 mit einem linearen Anteil des Gewichtungsfaktors GV. Diese Umsetzung der Regelabweichungen 204, 206 auf die Regeleingangsgröße bzw. das Kombinationssignal 216 erfolgt unterschiedlich, damit beispielsweise Regelparameter $k_I$ und $K_p$ gleich bleiben können.

Gemäß Ausführungsformen der vorliegenden Erfindung weist die Einrichtung 212 zum Bereitstellen einen PI-Regler auf, wobei der PI-Regler eine Mischform aus einem Proportional-Regler und einem Integral-Regler bedeutet. Abhängig von der Implementierung der Einrichtung 202 zum gewichteten Kombinieren und der Einrichtung 218 zum Liefern des geregelten Stroms kann die Einrichtung 212 zum Bereitstellen der Stellgröße 214 natürlich auch andere Reglerformen wie beispielsweise einen Proportional-Regler, einen Integral-Regler, einen Differenzial-Regler oder aus diesen Reglern kombinierte Regler aufweisen.

Gemäß einem Ausführungsbeispielder vorliegenden Erfindung entspricht die Stellgröße 214 einem Tastverhältnis bzw. einem Duty-Cycle einer pulsweiten Modulation. Ein pulsweiten moduliertes Steuersignal kann im Anschluss demoduliert werden, um beispielsweise mit einem Steueranschluss eines Regeltransistors gekoppelt zu werden.

Gemäß weiteren Ausführungsformen kann die Stellgröße 214 auch direkt ein Steuersignal für einen Regeltransistor bilden, wie beispielsweise eine Steuerspannung oder einen Steuerstrom. Dazu kann gemäß Ausführungsbeispielen die Einrichtung 202 zum gewichteten Kombinieren oder die Einrichtung 212 zum Bereitstellen wenigstens einen Regelverstärker aufweisen, um an einem Ausgang des Regelverstärkers die Stellgröße 214 bzw. die Steuerspannung oder den Steuerstrom bzw. ein aus der Stellgröße 214 ableitbares Signal zu erhalten.

Die anhand von Fig. 2 beschriebene Vorrichtung zum Bereitstellen eines geregelten limitierten Generatorstroms kann beispielsweise in Kraftfahrzeugen zur Steuerung der Lichtmaschine eingesetzt werden. Dabei kann neben einem Spannungssollwert 104 auch ein Strommaximum 208 eingestellt werden. Dadurch kann ein Motorsteuergerät die mechanische Last des Generators gezielt limitieren, wodurch einem Motormanagement neue Möglichkeiten zur Verfügung gestellt werden können. Für die Stromlimitierung ist zusätzlich eine Strommessung erforderlich, wie dies in Fig. 2 durch Bezugszeichen 220 angedeutet ist.

Im Vergleich zu herkömmlichen Generatorreglern, wie in Fig. 1 gezeigt, wird der bisher verwendete PI-Regler 108 dahingehend erweitert, dass für die Berechnung der Regeldifferenz nicht nur die Spannungsdifferenz 204, sondern auch die Stromgröße 210 bzw. die Stromdifferenz 206 Einfluss nimmt. Der Vorteil des erfindungsgemäßen Konzepts liegt darin, dass es zu keiner Umschaltung zwischen zwei unterschiedlichen Reglern (Spannungsregler, Stromregler) kommen muss und daher auch keine störenden Umschalteffekte möglich sind.

Bei dem erfindungsgemäßen Konzept werden also zwei unterschiedliche Regelanforderungen mit einem Reglerkern implementiert. Eine effektive Regeldifferenz wird durch einen Mischvorgang der beiden Regeldifferenzen 204 und 206 der beiden zu regelnden Größen (Spannung, Strom) gebildet.

Gemäß Ausführungsbeispielen umfasst die vorliegende Erfindung eine integrierte Schaltung mit einer anhand von Fig. 2 beschriebenen Vorrichtung 200 zum Bereitstellen eines geregelten limitierten Generatorerregerstroms zum Erhalten einer geregelten Generatorausgangsspannung. Eine solche integrierte Schaltung, die sich beispielsweise in einem Motorsteuergerät befinden kann, kann beispielsweise dazu verwendet werden, um eine Kfz-Bord-Spannung VB+A (Voltage Battery + Alternator) zu regeln. Die Sollspannung 104 kann von einem Steuergerät für ein 12V-Bordnetz beispielsweise in einem Bereich von 10,7 Volt bis 16 Volt in 100 mV-Schritten vorgegeben werden. Dabei stellt der hier angegebene Bereich für die Sollspannung 104 lediglich ein Beispiel dar. Natürlich ist die vorliegende Erfindung auch auf andere Spannungsbereiche mit anderen Spannungsschritten anwendbar, beispielsweise auf Spannungsbereiche von 5V bis 60V, oder höher, so dass gängige Kfz-Bordnetze, wie beispielsweise auch 24V- oder 42V-Bordnetze in den Spannungsbereichen enthalten sind.

Die Kfz-Bordspannung VB+A wird im Allgemeinen durch einen 3-Phasen-Generator mit Brückengleichrichtung erzeugt. Die 3-Phasen befinden sich im Stator des Generators und das Drehfeld wird mit Hilfe einer drehenden Erregerspule, der ein Generatorerregerstrom zugeführt wird, generiert. Der Generatorerregerstrom wird beispielsweise über Schleifringe zugeführt.

Die Drehzahl der Spule ist von der Fahrsituation bzw. der Motordrehzahl abhängig und kann von einem Steuer-IC (IC = Integrated Circuit, integrierte Schaltung) nicht beeinflusst werden.

Fig. 3 zeigt ein Blockdiagramm eines erfindungsgemäßen Steuergeräts 300 zum Bereitstellen eines geregelten, limitierten Generatorerregerstroms an einen Generator 114, um eine geregelte Ausgangsspannung 106 des Generators 114 zu erhalten.

Das Steuergerät 300 weist einen Mischer bzw. eine Einrichtung 202 zum gewichteten Kombinieren, einen PI-Regler bzw. eine Einrichtung 212 zum Bereitstellen einer Stellgröße und ein Stellglied bzw. eine Einrichtung 218 zum Liefern des geregelten, limitierten Generatorerregerstroms, basierend auf der Stellgröße 214, auf, so dass die geregelte Spannung 106 durch den Generator 114 bereitstellbar ist. Die Einrichtung 202 bzw. der Mischer weist einen Eingang für eine erste Regeldifferenz dV 204, basierend auf einem Spannungssollwert 104 und der geregelten Spannung 106 auf, wobei in dem in Fig. 3 gezeigten Ausführungsbeispiel der Wertebereich der ersten Regeldifferenz dV 204 einen Bereich von -8192 (+2V) bis +8191 (-2V) umfasst, entsprechend einem digitalen 14-Bit Signal. Die Wertebereiche für die erste Regeldifferenz dV 204 hängen beispielsweise von zur Verfügung stehenden digitalen Wortbreiten ab und können an vielfältige Vorgaben angepasst werden. Des Weiteren weist der Mischer 202 einen zweiten Eingang für eine zweite Regeldifferenz dC 206, basierend auf einem Strommaximalwert 208 und dem geregelten Strom 210 auf, wobei in dem in Fig. 3 gezeigten Ausführungsbeispiel der Wertebereich der zweiten Regeldifferenz dC 206 einen Bereich von - 128 (+4A) bis +127 (-4A) umfasst, entsprechend einem digitalen 8-Bit Signal. Die Wertebereiche für die zweite Regeldifferenz dC 206 hängen beispielsweise von zur Verfügung stehenden digitalen Wortbreiten ab und können an vielfältige Vorgaben angepasst werden.

Abhängig von der ersten Regeldifferenz dV 204 wird in einem Block 302 ein erster vorläufiger Gewichtungsfaktor GVV gebildet, welcher umgekehrt proportional zu der ersten Regeldifferenz dV 204 ist. Weist in dem in Fig. 3 dargestellten Ausführungsbeispiel die erste Regeldifferenz dV 204 einen digitalen Wert kleiner als $dV_{min}$ = -512 auf, so wird der vorläufige Gewichtungsfaktor GVV auf einen oberen Limitierungswert $L_o$ = 8 eingestellt. Ab einem Wert für die erste Regeldifferenz dV 204 von $dV_{max}$ = 0, ergibt sich ein unterer Limitierungswert für GVV von $L_u$ = 0. GVV wird also nach folgender Vorschrift bestimmt:

$$G_{vv} = \begin{cases} L_o & \text{für } dV \le dV_{\min} \\ L_o - \dfrac{(L_o - L_u)}{dV_{\max} - dV_{\min}} \cdot dV & \text{für } dV_{\min} < dV < dV_{\max} \\ L_u & \text{für } dV \ge dV_{\max} \end{cases}, \qquad (1)$$

mit $dV_{min}$ = -512, $dV_{max}$ = 0, $L_u$ = 0 und $L_o$ = 8.

Ein weiterer vorläufiger Gewichtungsfaktor GVC wird abhängig von der zweiten Regeldifferenz DC 206 in einem Block 304 gebildet, welcher proportional zu der zweiten Regeldifferenz dC 206 ist. Weist in dem in Fig. 3 dargestellten Ausführungsbeispiel die zweite Regeldifferenz dC 206 einen digitalen Wert kleiner als $dC_{min}$ = 0 auf, so wird der vorläufige Gewichtungsfaktor GCV auf den unteren Limitierungswert $L_o$ = 0 eingestellt. Ab einem Wert für die zweite Regeldifferenz dC 206 von $dC_{max}$ = 8, ergibt sich der obere Limitierungswert für GCV von $L_o$ = 8. GCV wird hier also nach folgender Vorschrift bestimmt:

$$G_{vc} = \begin{cases} L_u & \text{für } dC \le dC_{\min} \\ dC & \text{für } dC_{\min} < dC < dC_{\max} \\ L_o & \text{für } dC \ge dC_{\max} \end{cases} \qquad (2)$$

bestimmt.

An dieser Stelle soll darauf hingewiesen werden, dass die in den-Gleichungen (1) und (2) angegeben abschnittsweise definierten Funktionen gemäß weiteren Ausführungsbeispielen der vorliegenden Erfindung auch anders aussehen können. Die Wertebereiche für $dV_{min}$, $dV_{max}$, $dC_{min}$, $dC_{max}$, $L_u$ und $L_o$ hängen beispielsweise von zur Verfügung stehenden digitalen Wortbreiten ab und können an vielfältige Vorgaben angepasst werden. Des Weiteren ist die vorliegende Erfindung auch nicht auf Digitalwerte beschränkt, sondern kann ebenso auf analoge Signale angewendet werden.

Die an den Ausgängen der Blöcke 302 und 304 anliegenden, vorläufigen Gewichtungsfaktoren GVV und GVC werden zu einem Gewichtungsfaktor GV addiert, welcher hier durch einen Block 306 auf einen Wertebereich von $L_u$ bis $L_o$ limitiert wird. Soll die Stromlimitierung in dem in Fig. 3 gezeigten Steuergerät ausgeschaltet werden, so wird in dem Block 306 der Gewichtungsfaktor GV auf den vordefinierten Wert $L_o$ gesetzt. Auch hier sind natürlich andere Wertebereiche als die Beschriebenen denkbar.

Falls der an dem Ausgang des Blocks 306 anliegende Gewichtungsfaktor GV kleiner als der vordefinierte Wert $L_o$ (hier $L_o$=8) ist, d.h. GV < $L_o$, wird in dem Block 308 die erste Regeldifferenz dV 204 auf einen vordefinierten Wertebereich begrenzt, beispielsweise -2048 ≤ dV ≤ 2047. In einem Block 310, an dessen Eingängen GV und das nach dem Block 308 limitierte dV anliegen, wird ein erster Zwischenwert gemäß der Vorschrift

$$\frac{GV^2}{L_0^2}.dV \qquad (3)$$

mit $L_o$=8 gebildet. Mittels eines Blocks 312 an dessen ersten Eingang GV und an dessen zweiten Eingang dC 206 anliegt, wird ein zweiter Zwischenwert gemäß

$$L_o(L_o - GV)\cdot dC \qquad (4)$$

Mit $L_o$=8 gebildet. Der erste Zwischenwert und der zweite Zwischenwert werden addiert und die Summe anschließend in einem Block 314 auf einen vordefinierten Wertebereich limitiert, beispielsweise auf einen Wertebereich von -8192 bis 8191, d.h. ein digitales 14-Bit Signal. Ausgang des Blocks 314 liegt das auf der ersten Regeldifferenz dV 204 und der zweiten Regeldifferenz dC 206 basierende Kombinationssignal delta 216 an. Auch hier sind natürlich andere Wertebereiche für das Kombinationssignal delta 216 die anhand von Fig. 3 beschriebenen denkbar.

Das Kombinationssignal delta 216 bildet den Eingang zu dem PI-Regler 212. Darin wird das Kombinationssignal delta 216 in einen P-Reglerblock 320 und in einen I-Reglerblock 322 geleitet. Das Ausgangssignal des P-Reglerblocks 322 wird gemäß

$$\text{delta} \cdot K_I / 32 \qquad (5)$$

mit $K_I$ = 32 gebildet, mit einem rückgekoppelten Signal einer Integratorstufe 324 addiert, die resultierende Summe mittels eines Blocks 326 auf einen vordefinierten Wertebereich limitiert und der Integratorstufe 324 hinzugeführt. In der Integratorstufe 324 kann das Signal in einem vordefinierten Wertebereich, beispielsweise 0 ... 262143, aufakkumuliert werden, wobei eine Auffrischungsrate der Integratorstufe beispielsweise 880 Hz beträgt. Ein Ausgangssignal der Integratorstufe 324 wird mittels eines Blocks 328 durch einen vordefinierten Wert, beispielsweise 1024 geteilt, und mit einem Ausgangssignal des P-Reglerblocks 320 addiert. Dabei wird der Ausgang des P-Reglerblocks 320 gemäß

$$\text{delta} \cdot K_p / 32 \qquad (6)$$

mit $K_p$ = 4 gebildet. Diese Summe wird mittels eines Blocks 330 auf einen vorgegebenen Wertebereich limitiert, beispielsweise auf einen Wertebereich von 0 bis 255, entsprechend einem 8-Bit Signal. Das Ausgangssignal 214 des Blocks 330 bildet die Stellgröße, basierend auf dem Kombinationssignal delta 216 und der Regelvorschrift des PI-Reglers 212.

Bei dem in Fig.3 dargestellten Ausführungsbeispiel der vorliegenden Erfindung bildet das Signal 214 ein Tastverhältnis eines mit dem Signal 214 gekoppelten Pulsweitenmodulators 110. Gemäß einem Ausführungsbeispiel der vorliegenden Erfindung arbeitet der Pulsweitenmodulator 110 mit einer Auffrischungsrate von beispielsweise 440 Hz und liefert an seinem Ausgang ein pulsweitenmoduliertes Signal mit einer Fixfrequenz von beispielsweise 220 Hz. Mit diesem pulsweitenmodulierten Signal wird ein Regeltransistor bzw. High-Side Transistor 112 angesteuert, der gleichzeitig über die geregelte Kfz-Bordspannung VB+A versorgt wird. Dabei kann der Regeltransistor 112 beispielsweise ein Feldeffekt- oder ein Bipolartransistor sein. Ein von dem Regeltransistor 112 bereitgestellter Generatorreglerstrom wird mittels des Blocks 220 einer Strommessung unterzogen, um den Strommesswert auf einen Block 340 zur Bildung der zweiten Regeldifferenz zurückzukoppeln. Der von dem Regeltransistor 112 bereitgestellte Generatorerregerstrom wird nach dessen Messung einer Erregerspule des Generators 114 pulsweise zugeführt. Dadurch stellt sich ein über die Induktivität L und den Widerstand R der Spule geglätteter Generatorerregerstrom ein. Eine von der Motordrehzahl und dem Erregerstrom abhängige Spannung VB+A 106 wird mittels eine Blocks 116 gemessen und anschließend einem Block 342 zur Bildung der ersten Regeldifferenz 204 zugeführt.

Der Erregerstrom für den Generator 114 kann über eine Vorgabe des Strommaximalwerts 208 gemäß Ausführungsbeispielen beispielsweise in einem Bereich von 10 mA bis 20 A und bevorzugt in einem Bereich von 2A bis 8A limitiert werden. Zur Messung des Generatorerregerstroms weist der Block 220 beispielsweise einen Shunt-Widerstand auf, um im Freilaufpfad des Generators 114 den Strom messen zu können. Eventuell ist es sinnvoll zwischen Block 220 einen Block "Messfehlerkorrektur" einzufügen.

Bei dem in Fig. 3 gezeigten Ausführungsbeispiel der vorliegenden Erfindung umfasst das Stellglied 218 einen PWM-Block 110, den High-Side-Transistor bzw. Regeltransitor 112, eine drehende Erregerspule des Generators 114 und die Statorwicklung des Generators 114 mit Brückengleichrichtung. Gemäß einer Ausführungsform kann sich an der VB+A-Leitung noch eine Batterie befinden, die auf das gesamte Regelsystem dämpfend wirkt. Ein Regelbetrieb ist allerdings mit und ohne Batterie möglich.

Im Mischer 202 wird der Gewichtungsfaktor GV auf die im Vorhergehenden beschriebene Weise berechnet. Dieser Faktor legt fest, wie stark die Regelabweichung dV 204 der Spannung die Reglereingangsgröße bzw. das Kombinationssignal 216 bestimmen darf. Gemäß einem Ausführungsbeispiel der vorliegenden Erfindung besteht folgender Zusammenhang:

| | |
|---|---|
| $GV = 8 \rightarrow$ | nur Spannungsregler aktiv |
| $GV = 0 \rightarrow$ | nur Stromreglung (Stromlimitierung) aktiv |
| $1 \leq GV \leq 7 \rightarrow$ | Regler ist im Übergang Spannungs-/Stromreglung |

Die Umsetzung der Regelabweichung dV 204 bzw. dC 206 auf die Regeleingangsgröße bzw. das Kombinationssignal delta 216 erfolgt unterschiedlich, damit die Regelparameter $k_I$ und $k_p$ gleich bleiben können. Der Einfluss der ersten Regeldifferenz dV 204 wird gemäß einem Ausführungsbeispiel der vorliegenden Erfindung durch einen quadratischen Einfluss des Gewichtungsfaktors GV auf das Kombinationssignal delta 216 bestimmt, wo hingegen die zweite Regeldifferenz dC 206 lediglich linear mit dem Gewichtungsfaktor GV gewichtet wird. Gemäß den Gegebenheiten und gemäß weiteren Ausführungsbeispielen der vorliegenden Erfindung kann natürlich auch ein anderer Zusammenhang zwischen dV 204 bzw. dC 206, GV und delta 216 bestehen.

Gemäß Ausführungsbeispielen kann die Stromlimitierungsfunktion des in Fig. 3 dargestellten Steuergeräts zum Bereitstellen eines geregelten, limitierten Generatorerregerstroms auch deaktiviert werden. Dies kann beispielsweise dadurch implementiert werden, dass der Gewichtungsfaktor GV auf seinen Maximalwert $L_o$ gesetzt wird und keine Berechnung des Gewichtungsfaktors GV, wie im Vorhergehenden beschrieben, mehr erfolgt. Die Stromdifferenz dC 206 hat dann keinen Einfluss auf die Reglereingangsgröße delta 216.

Wenn der in Fig. 3 gezeigte Regelkreis im Mischer-Modus ist, wird im Allgemeinen der Spannungs-Sollwert 104 nicht mehr gänzlich erreicht. Dieses Verhalten soll im Nachfolgenden anhand der Fig. 4 näher beschrieben werden.

Fig. 4 zeigt ein Diagramm auf dessen horizontaler Achse 400 der Istwert des Generatorerregerstroms aufgezeichnet ist. Auf der vertikalen Achse 410 ist die Spannungsdifferenz aus Ist- und Sollwert aufgetragen. Die mit den Bezugszeichen 420 gekennzeichnete Kurve beschreibt das resultierte U/I-Verhalten einer erfindungsgemäßen Vorrichtung zum Bereitstellen eines geregelten, limitierten Generatorerregerstroms zum Erhalten einer geregelten Ausgangsspannung des Generators.

In dem mit Bezugszeichen 430 gekennzeichneten Bereich arbeitet der PI-Regler 212 mit einer lediglich aus der Generatorausgangsspannung abgeleiteten Größe als Führungsgröße (GV = 8). In dem mit Bezugszeichen 440 gekennzeichneten Bereich arbeitet der PI-Regler 212 im Mischer-Modus und die Führungsgröße 216 ergibt sich, wie im Vorhergehenden anhand von Fig. 3 beschrieben, aus einer Kombination der ersten Regeldifferenz 204 und der zweiten Regeldifferenz 206 ($1 \leq GV \leq 7$). In dem mit Bezugszeichen 450 gekennzeichneten Bereich arbeitet der PI-Regler 212 mit einer aus dem Generatorerregerstrom abgeleiteten Führungsgröße (GV = 0) .

Aus Fig. 4 lässt sich erkennen, dass die Generatorausgangsspannung 106 im Stromregelbetrieb 440 einbricht. Wie im Vorhergehenden bereits beschrieben wurde, ergibt sich die Generatorausgangsspannung 106 aus der Motordrehzahl und dem Generatorerregerstrom. Um eine vordefinierte Generatorausgangsspannung bzw. einen Sollwert 104 erreichen, ist bei einer hohen Motordrehzahl im Allgemeinen ein eher niedriger Generatorerregerstrom notwendig, umgekehrt, bei einer niedrigen Motordrehzahl ist ein vergleichsweise hoher Generatorerregerstrom notwendig. Wird der Generatorerregerstrom durch einen Regelmechanismus, wie er im Vorhergehenden beschrieben wurde, begrenzt, so bricht beispielsweise bei einer relativ niedrigen Motordrehzahl die vom Generator gelieferte Ausgangsspannung 106 ein, so wie es im Bereich 440 in Fig. 4 gezeigt ist.

Wie im Vorhergehenden bereits beschrieben wurde, kann bei aktiver Stromlimitierung die Spannung einbrechen. Bei einem Einsatz des erfindungsgemäßen Konzepts in einem Kfz ist das nicht besonders tragisch, da die Kfz-Batterie als Energiespeicher vorhanden ist und daher elektrische Systeme über eine gewisse Zeit von der Batterie mit Energie versorgt werden können. Überspannungszustände sind allerdings zu vermeiden, weil dadurch die Batterielebensdauer sinken kann und im Extremfall (z.B. über 16V bei 12V-Bordnetz) ein gefährlicher Vergasungsprozess in der Batterie einsetzen kann.

Zusammenfassend kann festgehalten werden, dass sich mit dem erfindungsgemäßen Konzept zum Bereitstellen eines geregelten, limitierten Generatorerregerstroms an einen Generator, um eine geregelte Ausgangsspannung des Generators zu erhalten, bei Generatorreglern neben einem Spannungssollwert 104 auch ein Strommaximum 208 eingestellt werden kann. Dadurch kann ein Steuergerät eine mechanische Last des Generators 114 gezielt limitieren, wodurch einem Kfz-Motormanagement neue Möglichkeiten zur Verfügung stehen. Für die Stromlimitierung ist zusätzlich lediglich eine Strommessung erforderlich.

Die Verwendung der vorliegenden Erfindung ist keineswegs auf die anhand der Figuren 2 -4 beschriebenen Implementierungen und Wertebereiche beschränkt. Vielmehr kann die gewichtete Kombination der ersten Regeldifferenz 204 und der zweiten Regeldifferenz 206 auch auf andere Art und Weise erfolgen und die Regelvorschrift kann ebenso von der hier beschriebenen PI-Regelvorschrift abweichen. Ein Stellglied des Regelkreises kann von der hier beschriebenen Ausführungsform abweichen und basierend auf der Stellgröße einen geregelten limitierten Generatorerregerstrom liefern.

Insbesondere wird darauf hingewiesen, dass abhängig von den Gegebenheiten, das erfindungsgemäße Schema auch in Software implementiert sein kann. Die Implementierung kann auf einem digitalem Speichermedium, insbesondere einer Diskette oder CD mit elektronisch auslesbaren Steuersignalen erfolgen, die so mit einem programmierbaren Computersystem und/oder Mikrocontroller zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner und/oder oder Mikrocontroller abläuft. In anderen Worten ausgedrückt, kann die Erfindung somit als ein Computerprogramm mit einem Programmcode zur Durchführung des Verfahrens zum Bereitstellen eines geregelten limitierten Generatorerregerstroms realisiert werden, wenn da Computerprogramm auf einem Computer und/oder Mikrocontroller abläuft.

Bezugszeichenliste

| | |
|---|---|
| 102 | Tiefpassfilter |
| 104 | Sollspannung |
| 106 | geregelte Ausgangsspannung |
| 108 | PI-Regler |
| 110 | Pulsweitenmodulator |
| 112 | Regeltransistor |
| 114 | Generator bzw. Alternator |
| 116 | Spannungsmesser |
| 118 | Filter |
| 120 | Stellglied |
| 200 | Vorrichtung zum Bereitstellen eines geregelten, limitierten Generatorerregerstroms gemäß einem Ausführungsbeispiel der vorliegenden Erfindung |
| 202 | Einrichtung zum gewichteten Kombinieren |
| 204 | erste Regeldifferenz |
| 206 | zweite Regeldifferenz |
| 208 | vordefinierter Stromwert |
| 210 | Generatorerregerstrom |
| 212 | Einrichtung zum Bereitstellen einer Stellgröße |
| 214 | Stellgröße |
| 216 | Kombinationssignal |
| 218 | Einrichtung zum Liefern des geregelten, limitierten Generatorerregerstroms |
| 220 | Strommesser |
| 302 | Block zur Bestimmung von vorläufigem Gewichtungsfaktor GVV |
| 304 | Block zur Bestimmung von vorläufigem Gewichtungsfaktor GVC |
| 306 | Block zur Limitierung von Gewichtungsfaktor GV |
| 308 | Block zur Limitierung von erster Regeldifferenz |
| 310 | Block zur Multiplikation der ersten Regeldifferenz mit einem quadratischen Anteil des Gewichtungsfaktors GV |
| 312 | Block zur Multiplikation der zweiten Regeldifferenz mit einem linearen Anteil des Gewichtungsfaktors GV |
| 314 | Block zur Limitierung des Kombinationssignals |
| 320 | P-Reglerblock bzw. Proportionalglied |
| 322 | Teil eines Integralreglerblocks |
| 324 | Akkumulationsblock |
| 326 | Limitierer |
| 328 | Dividierer |
| 330 | Block zur Limitierung der Stellgröße |
| 340 | Block zur Stromwert-Differenzbildung |
| 342 | Block zur Spannungswert-Differenzbildung |

**Patentansprüche**

1. Vorrichtung zum Bereitstellen eines geregelten, limitierten Generatorerregerstroms (210) an einen Generator (114), um eine geregelte Ausgangsspannung (106) des Generators zu erhalten, mit folgenden Merkmalen:

   einer Einrichtung (202) zum gewichteten Kombinieren einer gemäß einer ersten Vorschrift gewichteten ersten Regeldifferenz (204) basierend auf einer Sollspannung (104) und der geregelten Ausgangsspannung (106) und einer gemäß einer zweiten Vorschrift gewichteten zweiten Regeldifferenz (206) basierend auf einem vordefinierten Stromwert (208) und dem geregelten Generatorerregerstrom (210), um ein auf der gewichteten Kombination der ersten Regeldifferenz (204) und der zweiten Regeldifferenz (204) basierendes Kombinationssignal (216) zu erhalten, wobei die Einrichtung (202) zum gewichteten Kombinieren einen Gewichtungsfaktor (GV) verwendet, um jeweils einen gewichteten Einfluss der ersten Regeldifferenz (204) und der zweiten Regeldifferenz (206) auf das Kombinationssignal (216) gemäß der ersten und zweiten Vorschrift zu erhalten, und wobei der Gewichtungsfaktor (GV) proportional von der zweiten Regeldifferenz (206) abhängt und umgekehrt proportional von der ersten Regeldifferenz (204) abhängt, oder umgekehrt;
   einer Einrichtung (212) zum Bereitstellen einer Stellgröße (214) basierend auf dem Kombinationssignal (216) und einer Regelvorschrift; und
   einer Einrichtung (218) zum Liefern des geregelten, limitierten Generatorerregerstroms (210) an den Generator (114) basierend auf der Stellgröße (214), so dass die geregelte Ausgangsspannung (106) durch den Generator (114) bereitstellbar ist.

2. Vorrichtung gemäß Anspruch 1, bei der der vordefinierte Stromwert (208) ein maximaler Stromwert für den Generatorerregerstrom (210) ist.

3. Vorrichtung gemäß Anspruch 1, bei der der Gewichtungsfaktor (GV) proportional zu der zweiten Regeldifferenz (206) ist und umgekehrt proportional zu der ersten Regeldifferenz (204) ist.

4. Vorrichtung gemäß einem der Ansprüche 1 bis 3, bei der der Gewichtungsfaktor (GV) einen unteren und einen oberen Limitierungswert aufweist, wobei bei dem unteren Limitierungswert das Kombinationssignal (216) nur von der zweiten Regeldifferenz (206) abhängt und bei dem oberen Limitierungswert das Kombinationssignal (216) nur von der ersten Regeldifferenz (204) abhängt, oder umgekehrt.

5. Vorrichtung gemäß einem der Ansprüche 1 bis 4, bei der die Einrichtung zum gewichteten Kombinieren das Kombinationssignal aus der ersten Regeldifferenz multipliziert mit einem quadratischen Anteil des Gewichtungsfaktors und der zweiten Regeldifferenz multipliziert mit einem linearen Anteil des Gewichtungsfaktors bildet.

6. Vorrichtung gemäß einem der Ansprüche 1 bis 5, bei der der Gewichtungsfaktor (GV) sowohl in die erste als auch in die zweite Vorschrift eingeht.

7. Vorrichtung gemäß einem der Ansprüche 1 bis 5, bei der die Einrichtung (202) zum gewichteten Kombinieren das Kombinationssignal (216) aus der Kombination der ersten Vorschrift gemäß

   $$\frac{GV^2}{L_0^2}.dV$$

   und der zweiten Vorschrift gemäß

   $$L_o(\ L_o\ -\ GV)\cdot dC$$

   bildet, wobei $L_o$ einen oberen Limitierungswert des Gewichtungsfaktors (GV) bedeutet, dV die erste Regeldifferenz (204) und dC die zweite Regeldifferenz (206) bedeutet.

8. Vorrichtung gemäß einem der vorhergehenden Ansprüche, wobei die Einrichtung (212) zum Bereitstellen der Stellgröße (214) einen PI-Regler (108) aufweist.

9. Vorrichtung gemäß einem der vorhergehenden Ansprüche, wobei durch die Stellgröße (214) ein Tastverhältnis einer Pulsweitenmodulation für ein Regeltransistorsteuersignal einstellbar ist.

10. Vorrichtung gemäß einem der vorhergehenden Ansprüche, bei der die Einrichtung (218) zum Liefern den geregelten Strom (210) in einem Bereich von 10 Milliampere bis 20 Ampere liefert.

11. Vorrichtung gemäß einem der vorhergehenden Ansprüche, bei der die geregelte Ausgangsspannung (106) des Generators (114) in einem Bereich von 5 Volt bis 60 Volt liegt.

12. Verfahren zum Bereitstellen eines geregelten, limitierten Generatorerregerstroms (210) an einen Generator (114), um eine geregelte Ausgangsspannung (106) des Generators (114) zu erhalten, mit folgenden Schritten:

gewichtetes Kombinieren einer gemäß einer ersten Vorschrift gewichteten ersten Regeldifferenz (204) basierend auf einer Soll-Spannung (104) und der geregelten Ausgangsspannung (106) und einer gemäß einer zweiten Vorschrift gewichteten zweiten Regeldifferenz (206) basierend auf einem vordefiniertem Stromwert (208) und dem geregelten Generatorerregerstrom (210), um ein auf der Kombination der ersten Regeldifferenz (204) und der zweiten Regeldifferenz (206) basierendes Kombinationssignal (216) zu erhalten, wobei ein Gewichtungsfaktor (GV) ermittelt wird, um jeweils einen gewichteten Einfluss der ersten Regeldifferenz (204) und der zweiten Regeldifferenz (206) auf das Kombinationssignal (216) gemäß der ersten und zweiten Vorschrift zu erhalten, wobei der Gewichtungsfaktor (GV) proportional von der zweiten Regeldifferenz (206) abhängt und umgekehrt proportional von der ersten Regeldifferenz (204) abhängt, oder umgekehrt;
Bereitstellen einer Stellgröße (214) basierend auf dem Kombinationssignal (216) und einer Regelvorschrift; und
Liefern des geregelten, limitierten Stroms (210) an den Generator (114) basierend auf der Stellgröße (214), so dass die geregelte Ausgangsspannung (106) durch den Generator (114) bereitstellbar ist.

13. Computer-Programm zur Durchführung eines Verfahrens zum Bereitstellen eines geregelten, limitierten Generatorerregerstroms nach Anspruch 12, wenn das Computer-Programm auf einem Computer abläuft.

## Claims

1. Apparatus for providing a regulated, limited generator field current (210) to a generator (114) in order to obtain a regulated output voltage (106) from the generator, having the following features:

a device (202) for the weighted combining of a first control difference (204), weighted according to a first specification, based on a setpoint voltage (104) and the regulated output voltage (106), and a second control difference (206), weighted according to a second specification, based on a predefined current value (208) and the regulated generator field current (210) in order to obtain a combination signal (216) based on the weighted combination of the first control difference (204) and the second control difference (204), wherein the device (202) for the weighted combining uses a weighting factor (GV) in order to obtain a respective weighted influence of the first control difference (204) and the second control difference (206) on the combination signal (216) according to the first and second specifications, and wherein the weighting factor (GV) is proportionally dependent on the second control difference (206) and is inversely proportionally dependent on the first control difference (204), or vice versa;
a device (212) for providing a manipulated variable (214) based on the combination signal (216) and a control specification; and
a device (218) for delivering the regulated, limited generator field current (210) to the generator (114) based on the manipulated variable (214), so that the regulated output voltage (106) can be provided by the generator (114).

2. Apparatus according to Claim 1, in which the predefined current value (208) is a maximum current value for the generator field current (210).

3. Apparatus according to Claim 1, in which the weighting factor (GV) is proportional to the second control difference (206) and is inversely proportional to the first control difference (204).

4. Apparatus according to one of Claims 1 to 3, in which the weighting factor (GV) has a lower and an upper limiting value, wherein at the lower limiting value the combination signal (216) is dependent only on the second control difference (206) and at the upper limiting value the combination signal (216) is dependent only on the first control difference (204), or vice versa.

5. Apparatus according to one of Claims 1 to 4, in which the device for the weighted combining forms the combination signal from the first control difference multiplied by a square component of the weighting factor and the second control difference multiplied by a linear component of the weighting factor.

6. Apparatus according to one of Claims 1 to 5, in which the weighting factor (GV) is used both in the first and in the second specification.

7. Apparatus according to one of Claims 1 to 5, in which the device (202) for the weighted combining forms the combination signal (216) from the combination of the first specification according to

$$\frac{GV^2}{L_0^2}.dV$$

and the second specification according to

$$L_0(L_0 - GV)\cdot dC$$

wherein $L_0$ denotes an upper limiting value of the weighting factor (GV), dV denotes the first control difference (204) and dC denotes the second control difference (206).

8. Apparatus according to one of the preceding claims, wherein the device (212) for providing the manipulated variable (214) has a PI controller (108).

9. Apparatus according to one of the preceding claims, wherein the manipulated variable (214) can be used to set a duty ratio of a pulse width modulation for a control transistor control signal.

10. Apparatus according to one of the preceding claims, in which the device (218) for delivering the regulated current (210) delivers in a range from 10 milliamps to 20 amps.

11. Apparatus according to one of the preceding claims, in which the regulated output voltage (106) of the generator (114) is in a range from 5 volts to 60 volts.

12. Method for providing a regulated, limited generator field current (210) to a generator (114) in order to obtain a regulated output voltage (106) from the generator (114), having the following steps:

weighted combining of a first control difference (204), weighted according to a first specification, based on a setpoint voltage (104) and the regulated output voltage (106), and a second control difference (206), weighted according to a second specification, based on a predefined current value (208) and the regulated generator field current (210) in order to obtain a combination signal (216) based on the combination of the first control difference (204) and the second control difference (206), wherein a weighting factor (GV) is ascertained in order to obtain a respective weighted influence of the first control difference (204) and the second control difference (206) on the combination signal (216) according to the first and second specifications, wherein the weighting factor (GV) is proportionally dependent on the second control difference (206) and is inversely proportionally dependent on the first control difference (204), or vice versa;
providing a manipulated variable (214) based on the combination signal (216) and a control specification; and
delivering the regulated, limited current (210) to the generator (114) based on the manipulated variable (214), so that the regulated output voltage (106) can be provided by the generator (114).

13. Computer program for performing a method for providing a regulated, limited generator field current according to Claim 12 when the computer program runs on a computer.

**Revendications**

1. Système pour mettre à la disposition d'un alternateur (114) un courant (210) d'excitation régulé et limité, afin d'obtenir une tension (106) de sortie régulée de l'alternateur, ayant les caractéristiques suivantes :

   un dispositif (202) de combinaison pondérée d'une première différence (204) de régulation pondérée suivant une première prescription et reposant sur une tension (104) de consigne et la tension (106) de sortie régulée et d'une deuxième différence (206) de régulation pondérée suivant une deuxième prescription et reposant sur une valeur (208) de courant définie à l'avance et le courant (210) d'excitation de l'alternateur régulé, afin d'obtenir un signal (216) de combinaison reposant sur la combinaison pondérée de la première différence (204) de régulation et de la deuxième différence (204) de régulation, le dispositif (202) étant utilisé pour combiner de manière pondérée un facteur (GV) de pondération, afin d'obtenir respectivement une influence pondérée de la première différence (204) de régulation et de la deuxième différence (206) de régulation sur le signal (216) de combinaison suivant la première et la deuxième prescriptions et dans lequel le facteur (GV) de pondération est proportionnel à la deuxième différence (206) de régulation et inversement proportionnel à la première différence (204) de régulation ou inversement;
   un dispositif (212) pour mettre une grandeur (214) de réglage reposant sur le signal (216) de combinaison et sur une prescription de régulation et
   un dispositif (218) pour fournir, à l'alternateur (114), le courant (210) d'excitation régulé et limité sur la base de la grandeur (214) de réglage, de manière à ce que la tension (106) de sortie régulée puisse être mise à disposition par l'alternateur (114).

2. Système suivant la revendication 1, dans lequel la valeur (208) de courant définie à l'avance est une valeur maximum du courant (210) d'excitation de l'alternateur.

3. Système suivant la revendication 1, dans lequel le facteur (GV) de pondération est proportionnel à la deuxième différence (206) de régularisation et inversement proportionnel à la première différence (204) de régulation.

4. Système suivant l'une des revendications 1 à 3, dans lequel le facteur (GV) de pondération a une valeur de limitation inférieure et une valeur de limitation supérieure, dans lequel, à la valeur de limitation inférieure, le signal (216) de combinaison ne dépend que de la deuxième différence (206) de régulation et, à la valeur de limitation supérieure, le signal (216) de combinaison ne dépend que de la première différence (204) de régulation ou inversement.

5. Système suivant l'une des revendications 1 à 4, dans lequel le dispositif de combinaison pondéré forme le signal de combinaison à partir de la première différence de régulation multipliée par une proportion au carré du facteur de pondération et de la deuxième différence de régulation multipliée par une proportion linéaire du facteur de pondération.

6. Système suivant l'une des revendications 1 à 5, dans lequel le facteur (GV) de pondération entre à la fois dans la première et dans la deuxième prescription.

7. Système suivant l'une des revendications 1 à 5, dans lequel le dispositif (202) de combinaison pondéré forme le signal (216) de combinaison à partir de la combinaison de la première prescription suivant

   $$\frac{GV^2}{L_0^2}\cdot dV$$

   et de la deuxième prescription suivant

   $$L_o(L_o - GV)\cdot dC$$

   $L_o$ étant une valeur de limitation supérieure du facteur (GV) de pondération, dV étant la première différence (204) de régulation et dC étant la deuxième différence (206) de régulation.

8. Système suivant l'une des revendications précédentes, dans lequel le dispositif (212) de mise à disposition de la grandeur (214) de réglage est un régleur PI (108).

**9.** Système suivant l'une des revendications précédentes, dans lequel il peut être réglé, par la grandeur (214) de réglage, un rapport cyclique d'une modulation en largeur d'impulsion pour un signal de commande d'un transistor de régulation.

**10.** Système suivant l'une des revendications précédentes, dans lequel le dispositif (218), fournissant le courant régulé, le fournit dans une plage de 10 milliampères à 20 ampères.

**11.** Système suivant l'une des revendications précédentes, dans lequel la tension (106) de sortie régulée de l'alternateur (114) est dans une plage allant de 5 volt à 60 volt.

**12.** Procédé pour mettre à disposition d'un alternateur (114) un courant (210) d'excitation régulé et limité afin d'obtenir une tension (106) de sortie régulée de l'alternateur (114), comprenant les stades suivants :

la combinaison pondérée d'une première différence (204) de régulation pondérée suivant une première prescription, reposant sur une tension (104) de consigne et la tension (106) de sortie régulée et d'une deuxième différence (206) de régulation pondérée suivant une deuxième prescription, reposant sur une valeur (208) de courant définie à l'avance et le courant (210) d'excitation régulé de l'alternateur, afin d'obtenir un signal (216) de combinaison, reposant sur la combinaison de la première différence (204) de régulation et de la deuxième différence (206) de régulation, un facteur (GV) de pondération étant déterminé pour obtenir respectivement une influence pondérée de la première différence (204) de régulation et de la deuxième différence (206) de régulation sur le signal (216) de combinaison suivant la première et la deuxième prescription, le facteur (GV) de pondération étant proportionnel à la deuxième différence (206) de régulation et inversement proportionnel à la première différence (204) de régulation ou inversement;

la mise à disposition d'une grandeur (214) de réglage, reposant sur le signal (216) de combinaison et sur une prescription de régulation et

la fourniture du courant (210) régulé et limité à l'alternateur (114) sur la base de la grandeur (214) de réglage, de manière à ce que la tension (106) de sortie régulée puisse être mise à disposition par l'alternateur (114) .

**13.** Programme d'ordinateur pour effectuer un procédé de mise à disposition d'un courant d'alternateur régulé et limité suivant la revendication 12 lorsque le programme d'ordinateur se déroule sur un ordinateur.

FIG 1

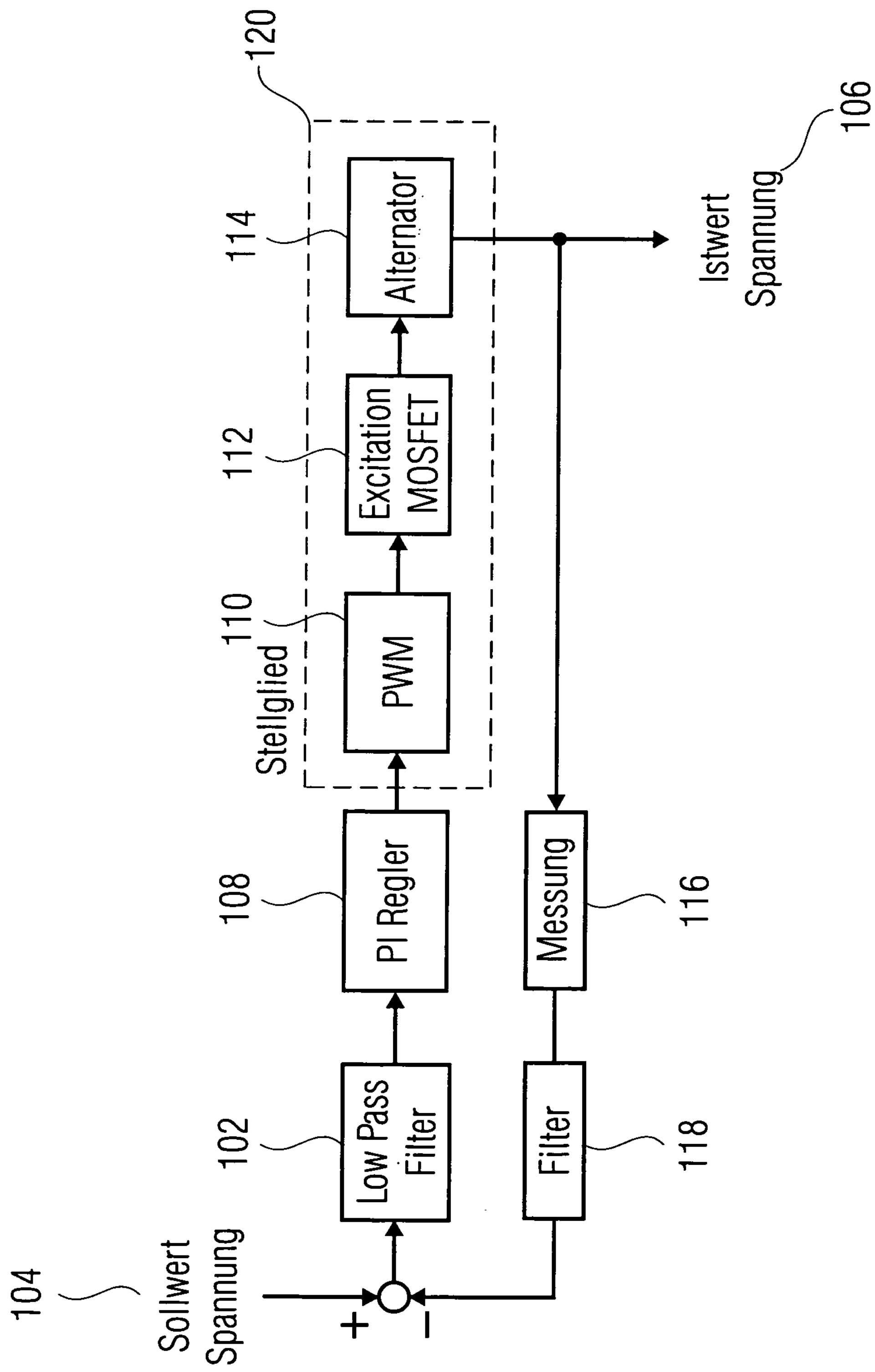

104
Sollwert Spannung
+
-
Low Pass Filter
102
PI Regler
108
Stellglied
PWM
110
Excitation MOSFET
112
Alternator
114
120
Istwert Spannung
106
Messung
116
Filter
118

FIG 2

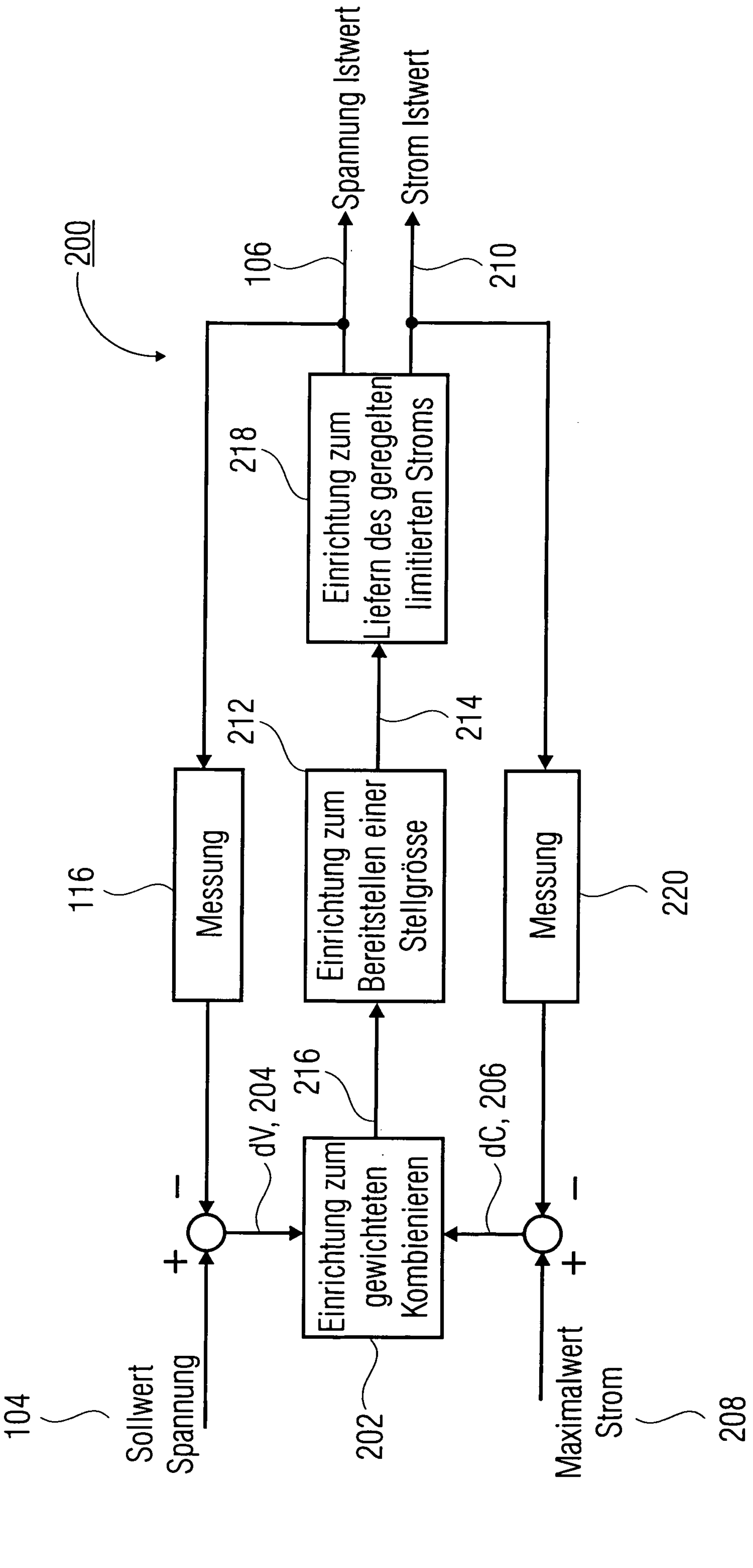
200
104
Sollwert Spannung
116
Messung
106
Spannung Istwert
202
Einrichtung zum gewichteten Kombienieren
dV, 204
dC, 206
216
212
Einrichtung zum Bereitstellen einer Stellgrösse
214
218
Einrichtung zum Liefern des geregelten limitierten Stroms
210
Strom Istwert
220
Messung
208
Maximalwert Strom
+
-
+
-

FIG 3

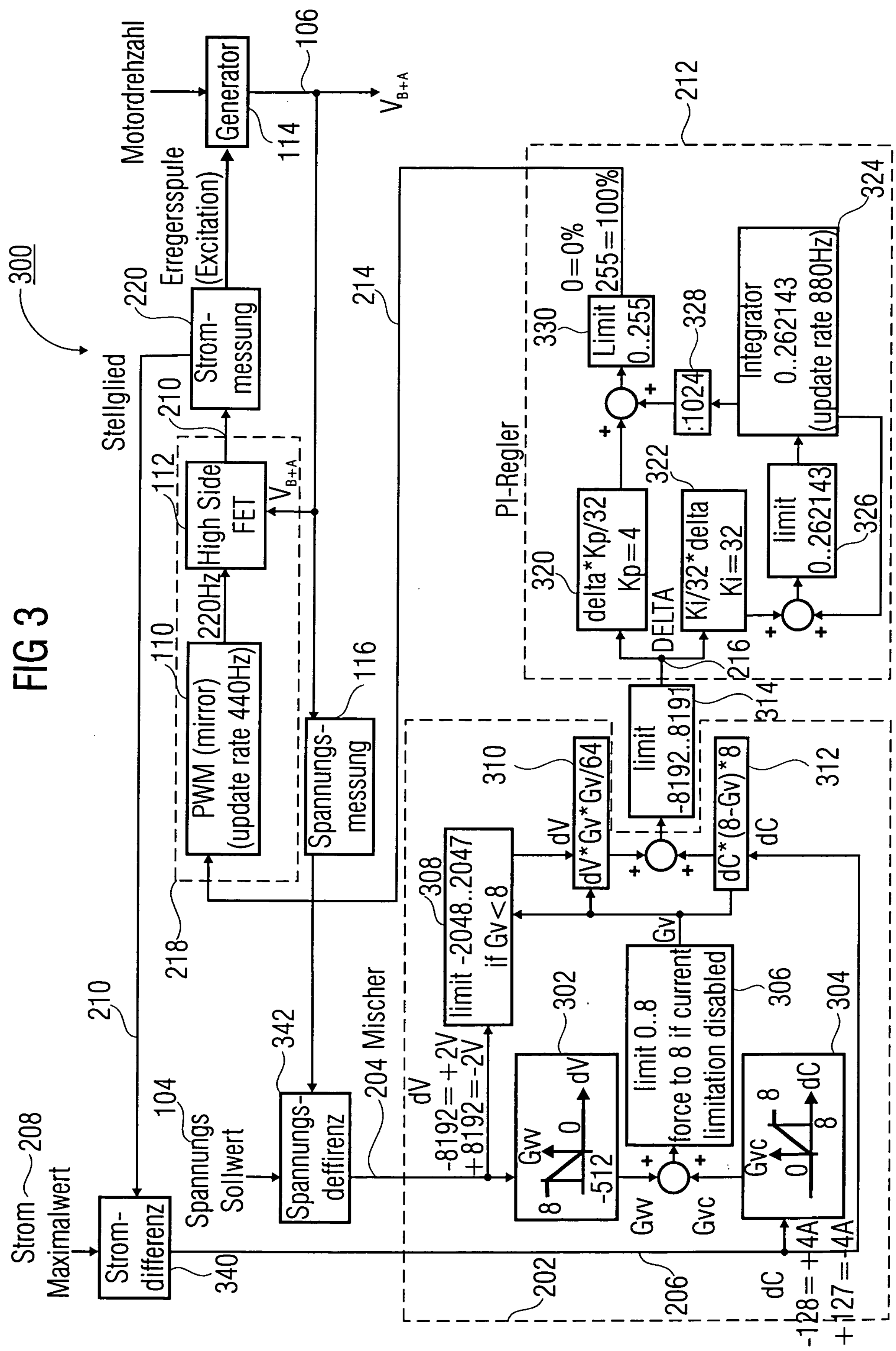
300
Motordrehzahl
Generator
114
106
V B+A
Erregersspule
(Excitation)
Stellglied
220
Strom-
messung
210
112
High Side
FET
V B+A
110
220Hz
PWM (mirror)
(update rate 440Hz)
116
Spannungs-
messung
214
218
212
PI-Regler
330
Limit
0..255
0=0%
255=100%
328
:1024
324
Integrator
0..262143
(update rate 880Hz)
322
320
delta*Kp/32
Kp=4
Ki/32*delta
Ki=32
326
limit
0..262143
DELTA
216
314
limit
-8192..8191
310
dV*Gv*Gv/64
312
dC*(8-Gv)*8
dV
dC
308
limit -2048..2047
if Gv<8
Gv
306
limit 0..8
force to 8 if current
limitation disabled
302
Gvv
8
-512
0
dV
304
Gvc
0
8
dC
8
Gvv
Gvc
dV
-8192=+2V
+8192=-2V
204 Mischer
342
Spannungs-
deffirenz
104
Spannungs
Sollwert
210
Strom
Maximalwert
208
Strom-
differenz
340
202
206
dC
-128=+4A
+127=-4A

FIG 4

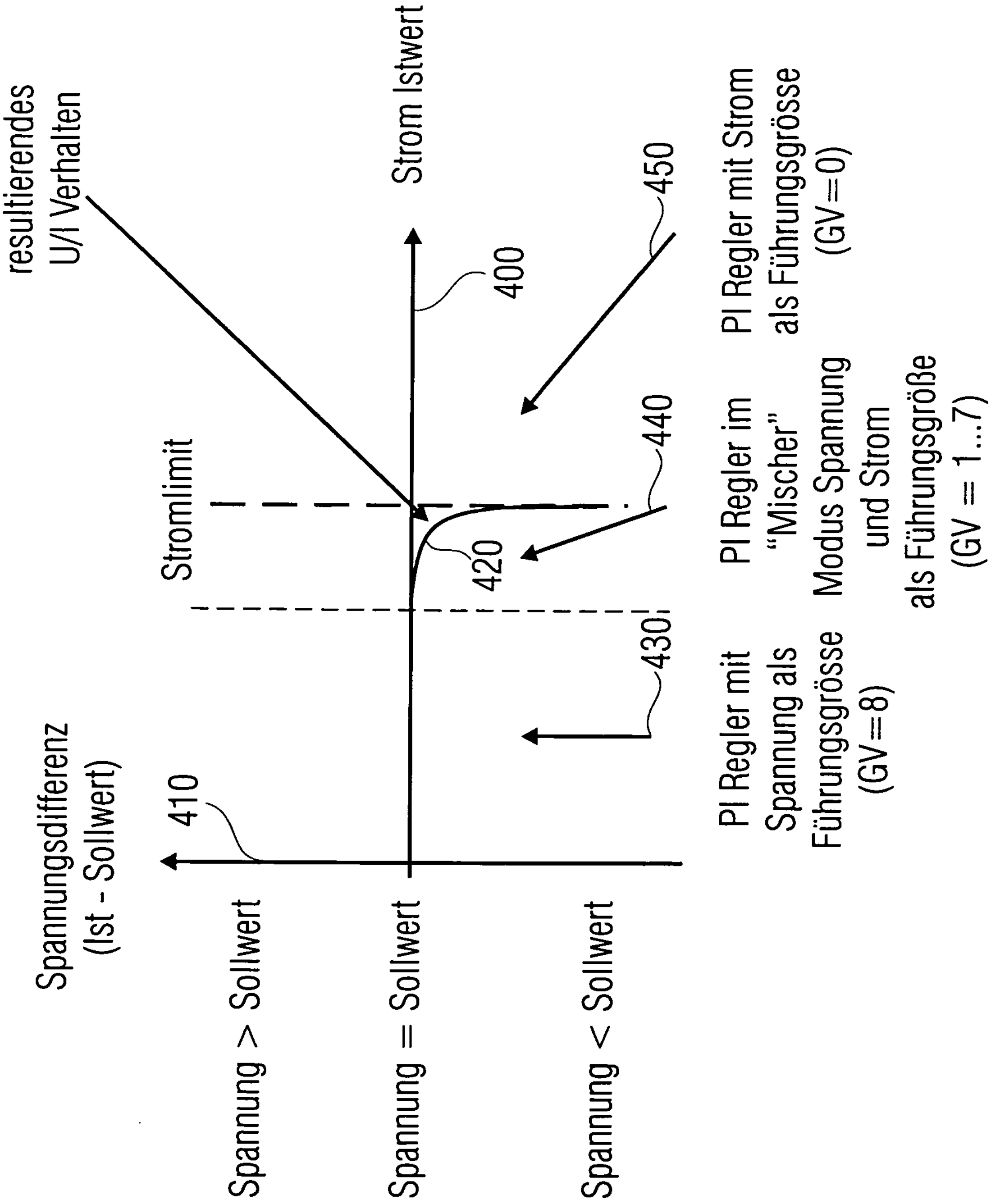
Spannungsdifferenz
(Ist - Sollwert)
410
Spannung > Sollwert
Spannung = Sollwert
Spannung < Sollwert
PI Regler mit
Spannung als
Führungsgrösse
(GV=8)
430
Stromlimit
420
440
PI Regler im
"Mischer"
Modus Spannung
und Strom
als Führungsgröße
(GV = 1...7)
resultierendes
U/I Verhalten
400
450
Strom Istwert
PI Regler mit Strom
als Führungsgrösse
(GV=0)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2003178973 A1
- DE 102005014136 A1
- EP 1187307 A1
- US 5508601 A1
- US 2006108987 A1